# EUROPEAN PATENT SPECIFICATION

(11) **EP 3 038 292 B1**
(45) Date of publication and mention of the grant of the patent: **12.09.2018**
(21) Application number: 15197061.3
(22) Date of filing: 30.11.2015
(51) Int. Cl.: H04L 25/20, H04L 29/06, H04W 8/22, H04L 12/24, H04L 12/28

(54) **METHOD, APPARATUS AND SYSTEM FOR DEVICE MANAGEMENT**
VERFAHREN, VORRICHTUNG UND SYSTEM ZUR VORRICHTUNGSVERWALTUNG
PROCÉDÉ, APPAREIL ET SYSTÈME POUR LA GESTION DE DISPOSITIF

(30) Priority: 24.12.2014 CN 201410815619
(43) Date of publication of application: 29.06.2016
(73) Proprietor: Xiaomi Inc., Beijing 100085 (CN)
(72) Inventor: CHEN, Yong, Haidian District Beijing 100085 (CN); CHEN, Weiyang, Haidian District Beijing 100085 (CN); YU, Bo, Haidian District Beijing 100085 (CN); WANG, Yidong, Haidian District Beijing 100085 (CN); ZHANG, Pengfei, Haidian District Beijing 100085 (CN); GUO, Yu, Haidian District Beijing 100085 (CN)
(74) Representative: Reeve, Nicholas Edward

(56) References cited:
- EP-A1- 2 247 067
- WO-A1-01/71489
- US-A1- 2014 089 383

## Description

### TECHNICAL FIELD

The present disclosure generally relates to technical field of routers, and more particularly, to a method for device management, as well as a device and a system thereof

### BACKGROUND

Routers are widely used as a gateway device to provide wireless network access for electronic devices. The European patent application EP 2247067 discloses a software architecture in the form of a virtual router embedded in an appliance of a home network, the virtual router connecting the various physical components of the appliance over an internal communications network on said appliance.

A complete coverage of wireless network can hardly be provided by only one wireless router due to signal strength of the router as well as influence of operation environment. Therefore, a manner of routing and relay is generally adopted, where there are a plurality of wireless relay routers being connected with a wireless primary router, distributed at different locations, and configured to perform amplification to wireless signal received from the wireless primary router, so as to enable those electronic devices far apart from the wireless primary router to access wireless network via a connection to the wireless relay router. However, when there are wireless relay routers connected with the wireless primary router, users are not able to view and manage electronic devices connected to the wireless relay routers by logging in to the wireless primary router.

### SUMMARY OF THE INVENTION

In order to overcome a problem, that users are not able to view and manage electronic devices connected with wireless relay router by logging to wireless primary router when there are wireless relay routers connected with the wireless primary router, existed in related arts, a method for device management as well as a device and a system thereof are provided by the present disclosure. The technical solution will be described as follows.

According to a first aspect of embodiments of the present disclosure, there is provided a method for device management, applicable to a wireless primary router, comprising: establishing a management connection with a wireless relay router; acquiring a management interface identifier from the wireless relay router via the management connection, the management interface identifier being an identifier of an API (Application Programming Interface) to provide management function in the wireless relay router; and transmitting a management instruction to the wireless relay router via the management connection, the management instruction being used to manage an electronic device connected with the wireless relay router and carrying the management interface identifier.

In an embodiment, the establishing a management connection with a wireless relay router includes: receiving a connection request transmitted from the wireless relay router; and transmitting request acceptance information to the wireless relay router, and establishing the management connection with the wireless relay router.

In an embodiment, the acquiring a management interface identifier from the wireless relay router via the management connection includes: transmitting a management interface acquiring request to the wireless relay router via the management connection; and receiving at least one management interface identifier transmitted via the management connection from the wireless relay router.

In an embodiment, the method further includes: transmitting a private protocol message to the wireless relay router via the management connection; receiving a feedback message transmitted from the wireless relay router, the feedback message being fedback from the wireless relay router receiving the private protocol message; detecting whether the wireless relay router is compatible with the wireless primary router according to the feedback message; and performing the step of acquiring a management interface identifier from the wireless relay router via the management connection, if it is detected the wireless relay router is compatible with the wireless primary router.

In an embodiment, the transmitting a management instruction to the wireless relay router via the management connection includes: acquiring a first interface identifier in the management interface identifier, the first interface identifier being an identifier of an API for acquiring information of the electronic device; transmitting a first management instruction carrying the first interface identifier to the wireless relay router via the management connection, the wireless relay router being configured to acquire the first interface identifier in the first management instruction, and invoke the API corresponding to the first interface identifier to obtain information of at least one electronic device connected with the wireless relay router as first device information; receiving the first device information transmitted from the wireless relay router; and transmitting the first device information to a management device, the management device being configured to display the first device information.

In an embodiment, the transmitting a management instruction to the wireless relay router via the management connection includes: acquiring a second interface identifier in the management interface identifier, the second interface identifier being an identifier of an API for controlling the electronic device; and transmitting a second management instruction carrying the second interface identifier to the wireless relay router via the management connection, the wireless relay router being configured to acquire the second interface identifier in the second management instruction, and invoke the API corresponding to the second interface identifier to control the electronic device connected with the wireless relay router.

In an embodiment, the transmitting the first device information to a management device includes: acquiring information of at least one electronic device connected with the wireless primary router as second device information; and transmitting the first device information and the second device information to the management device; wherein, the first device information includes at least one selected from a group consisting of a MAC (Media Access Control) address, an IP (Internet Protocol) address, and connection status information of the electronic device connected with the wireless relay router; and the second device information includes at least one selected from a group consisting of a MAC address, an IP address, and connection status information of the electronic device connected with the wireless primary router.

According to a second aspect of embodiments of the present disclosure, there is provided a method for device management, applicable to a wireless relay router, comprising: establishing a management connection with a wireless primarywireless wireless primary router; providing the wireless primary router with a management interface identifier via the management connection, the management interface identifier being an identifier of an API for providing management function in the wireless relay router; receiving a management instruction transmitted via the management connection from the wireless primary router, the management instruction carrying the management interface identifier; and managing an electronic device connected with the wireless relay router according to the management instruction.

In an embodiment, the establishing a management connection with a wireless primary router includes: transmitting a connection request to the wireless primary router; and receiving request acceptance information transmitted from the wireless primary router, and establishing the management connection with the wireless primary router.

In an embodiment, the providing the wireless primary router with a management interface identifier via the management connection includes: receiving a management interface acquiring request transmitted via the management connection from the wireless primary router, the management interface acquiring request being transmitted from the wireless primary router detected to be compatible with the wireless relay router; and transmitting at least one management interface identifier to the wireless primary router via the management connection.

In an embodiment, the method further includes: receiving a private protocol message transmitted from the wireless primary router; and transmitting a feedback message to the wireless primary router via the management connection, the wireless primary router being configured to detect whether the wireless primary router is compatible with the wireless relay router according to the feedback message.

In an embodiment, the managing an electronic device connected with the wireless relay router according to the management instruction includes: acquiring a first interface identifier in a first management instruction, the first interface identifier being an identifier of an API for acquiring information of the electronic device; invoking the API corresponding to the first interface identifier to obtain information of at least one electronic device connected with the wireless relay router as first device information; and transmitting the first device information to the wireless primary router via the management connection, the first device information including at least one selected from a group consisting of a MAC address, an IP address, and connection status information of the electronic device connected with the wireless relay router.

In an embodiment, the managing an electronic device connected with the wireless relay router according to the management instruction includes: acquiring a second interface identifier in a second management instruction, the second interface identifier being an identifier of an API for controlling the electronic device; and invoking the API corresponding to the second interface identifier to control the electronic device connected with the wireless relay router.

According to a third aspect of embodiments of the present disclosure, there is provided an apparatus for device management, applicable to a wireless primary router, comprising: a first connection module, configured to establish a management connection with a wireless relay router; an identifier acquiring module, configured to acquire a management interface identifier from the wireless relay router via the management connection established by the first connection module, the management interface identifier being an identifier of an API for providing management function in the wireless relay router; and

an instruction transmission module, configured to transmit a management instruction to the wireless relay router via the management connection established by the first connection module, the management instruction being used to manage an electronic device connected with the wireless relay router and carrying the management interface identifier.

In an embodiment, the first connection module includes: a first receiving submodule, configured to receive a connection request transmitted from the wireless relay router; and a first establishing submodule, configured to transmit request acceptance information to the wireless relay router, and establish the management connection with the wireless relay router.

In an embodiment, the identifier acquiring module includes: a first transmission submodule, configured to transmit a management interface acquiring request to the wireless relay router via the management connection; and an identifier receiving submodule, configured to receive at least one management interface identifier transmitted via the management connection from the wireless relay router.

In an embodiment, the apparatus further includes: a message transmission module, configured to transmit a private protocol message to the wireless relay router via the management connection; a feedback message receiving module, configured to receive a feedback message transmitted from the wireless relay router, the feedback message being fedback from the wireless relay router receiving the private protocol message; and a detection module, configured to detect whether the wireless relay router is compatible with the wireless primary router according to the feedback message received by the feedback message receiving module; the detection module is further configured to, if it is detected the wireless relay router is compatible with the wireless primary router, perform the step of acquiring a management interface identifier from the wireless relay router via the management connection.

In an embodiment, the instruction transmission module includes: a first acquiring submodule, configured to acquire a first interface identifier in the management interface identifier, the first interface identifier being an identifier of an API for acquiring information of the electronic device; a first instruction transmission submodule, configured to transmit a first management instruction, carrying the first interface identifier acquired by the first acquiring submodule, to the wireless relay router via the management connection, the wireless relay router being configured to acquire the first interface identifier in the first management instruction, and invoke the API corresponding to the first interface identifier to obtain information of at least one electronic device connected with the wireless relay router as first device information; a device information receiving submodule, configured to receive the first device information transmitted from the wireless relay router; and a first information transmission submodule, configured to transmit the first device information received by the device information receiving submodule to a management device, the management device being configured to display the first device information.

In an embodiment, the instruction transmission module includes: a second acquiring submodule, configured to acquire a second interface identifier in the management interface identifier, the second interface identifier being an identifier of an API for controlling the electronic device; and a second instruction transmission submodule, configured to transmit a second management instruction, carrying the second interface identifier acquired by the second acquiring submodule, to the wireless relay router via the management connection, the wireless relay router being configured to acquire the second interface identifier in the second management instruction, and invoke the API corresponding to the second interface identifier to control the electronic device connected with the wireless relay router.

In an embodiment, the first information transmission submodule includes: an information acquiring submodule, configured to acquire information of at least one electronic device connected with the wireless primary router as second device information; and an information transmission submodule, configured to transmit the first device information, and the second device information acquired by the information acquiring submodule, to the management device; wherein, the first device information includes at least one selected from a group consisting of a MAC address, an IP address, and connection status information of the electronic device connected with the wireless relay router; and the second device information includes at least one selected from a group consisting of a MAC address, an IP address, and connection status information of the electronic device connected with the wireless primary router.

According to a fourth aspect of embodiments of the present disclosure, there is provided an apparatus for device management, applicable to a wireless relay router, comprising: a second connection module, configured to establish a management connection with a wireless primary router;

an identifier providing module, configured to provide the wireless primary router with a management interface identifier via the management connection established by the second connection module, the management interface identifier being an identifier of an API for providing management function in the wireless relay router; an instruction receiving module, configured to receive a management instruction transmitted via the management connection from the wireless primary router, the management instruction carrying the management interface identifier; and

a management module, configured to manage an electronic device connected with the wireless relay router according to the management instruction received by the instruction receiving module.

In an embodiment, the second connection module includes: a second transmission submodule, configured to transmit a connection request to the wireless primary router; and a second establishing submodule, configured to receive request acceptance information transmitted from the wireless primary router, and establish the management connection with the wireless primary router.

In an embodiment, the identifier providing module includes: a second receiving submodule, configured to receive a management interface acquiring request transmitted via the management connection from the wireless primary router, the management interface acquiring request being transmitted from the wireless primary router detected to be compatible with the wireless relay router; and

an identifier transmission submodule, configured to transmit at least one management interface identifier to the wireless primary router via the management connection.

In an embodiment, the apparatus further includes: a message receiving module, configured to receive a private protocol message transmitted from the wireless primary router; and a feedback message transmission module, configured to transmit a feedback message to the wireless primary router via the management connection, the wireless primary router being configured to detect whether the wireless primary router is compatible with the wireless relay router according to the feedback message.

In an embodiment, the management module includes: a third acquiring submodule, configured to acquire a first interface identifier in a first management instruction, the first interface identifier being an identifier of an API for acquiring information of the electronic device; a device information acquiring submodule, configured to invoke the API corresponding to the first interface identifier acquired by the third acquiring submodule to obtain information of at least one electronic device connected with the wireless relay router as first device information; and a second information transmission submodule, configured to transmit the first device information acquired by the device information acquiring submodule to the wireless primary router via the management connection, the first device information including at least one selected from a group consisting of a MAC address, an IP address, and connection status information of the electronic device connected with the wireless relay router.

In an embodiment, the management module includes: a fourth acquiring submodule, configured to acquire a second interface identifier in a second management instruction, the second interface identifier being an identifier of an API for controlling the electronic device; and a control submodule, configured to invoke the API corresponding to the second interface identifier acquired by the fourth acquiring submodule to control the electronic device connected with the wireless relay router.

According to a fifth aspect of embodiments of the present disclosure, there is provided an apparatus for device management, applicable to a wireless primary router, comprising:

a processor; and a memory for storing instructions executable by the processor; wherein the processor is configured to: establish a management connection with a wireless relay router; acquire a management interface identifier from the wireless relay router via the management connection, the management interface identifier being an identifier of an Application Programming Interface API for providing management function in the wireless relay router; and transmit a management instruction to the wireless relay router via the management connection, the management instruction being used to manage an electronic device connected with the wireless relay router and carrying the management interface identifier.

According to a sixth aspect of embodiments of the present disclosure, there is provided an apparatus for device management, applicable to a wireless relay router, comprising: a processor; and

a memory for storing instructions executable by the processor; wherein the processor is configured to: establish a management connection with a wireless primary router; provide the wireless primary router with a management interface identifier via the management connection, the management interface identifier being an identifier of an Application Programming Interface API for providing management function in the wireless relay router; receive a management instruction transmitted via the management connection from the wireless primary router, the management instruction carrying the management interface identifier; and manage an electronic device connected with the wireless relay router according to the management instruction.

According to a seventh aspect of embodiments of the present disclosure, there is provided a network system, including a wireless primary router and a wireless relay router, the wireless primary router is connected with the wireless relay router via a wireless network or a wired network; the wireless primary router includes an apparatus for device management according to the third aspect described above; and the wireless relay router includes an apparatus for device management according to the fourth aspect described above; or, the wireless primary router includes an apparatus for device management according to the fifth aspect described above; and the wireless relay router includes an apparatus for device management according to the sixth aspect described above.

Following advantageous effects may be achieved by the technical solution provided in the embodiments of the present disclosure.

The management connection is established with the wireless relay router, the management interface identifier is acquired from the wireless relay router via the management connection, the management instruction carrying the management interface identifier, is transmitted to the wireless relay router via the management connection and used to manage the electronic device connected with the wireless relay router. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an environmental schematic diagram of implementation environment related to various embodiments according to the present disclosure.
Fig. 2 is a flow chart showing a method for device management, according to an exemplary embodiment.
Fig. 3 is a flow chart showing a method for device management, according to another exemplary embodiment.
Fig. 4A is a flow chart showing a method for device management, according to yet another exemplary embodiment.
Fig. 4B is an implementation schematic diagram of a method for device management, according to yet another exemplary embodiment.
Fig. 4C is a flow chart showing a management process in a method for device management, according to yet another exemplary embodiment.
Fig. 5 is a block diagram illustrating an apparatus for device management, according to an exemplary embodiment.
Fig. 6 is a block diagram illustrating an apparatus for device management, according to another exemplary embodiment.
Fig. 7 is a block diagram illustrating an apparatus for device management, according to yet another exemplary embodiment.
Fig. 8 is a block diagram illustrating an apparatus for device management, according to still another exemplary embodiment.
Fig. 9 is a block diagram of an apparatus for device management, according to an exemplary embodiment.
Fig. 10 is a block diagram of a network system, according to an exemplary embodiment.

Specific embodiments of the present disclosure are shown by the above drawings, and more detailed description will be made hereinafter. These drawings and text description are not for limiting the scope of conceiving the present disclosure in any way, but for illustrating the concept of the present disclosure for those skilled in the art by referring to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

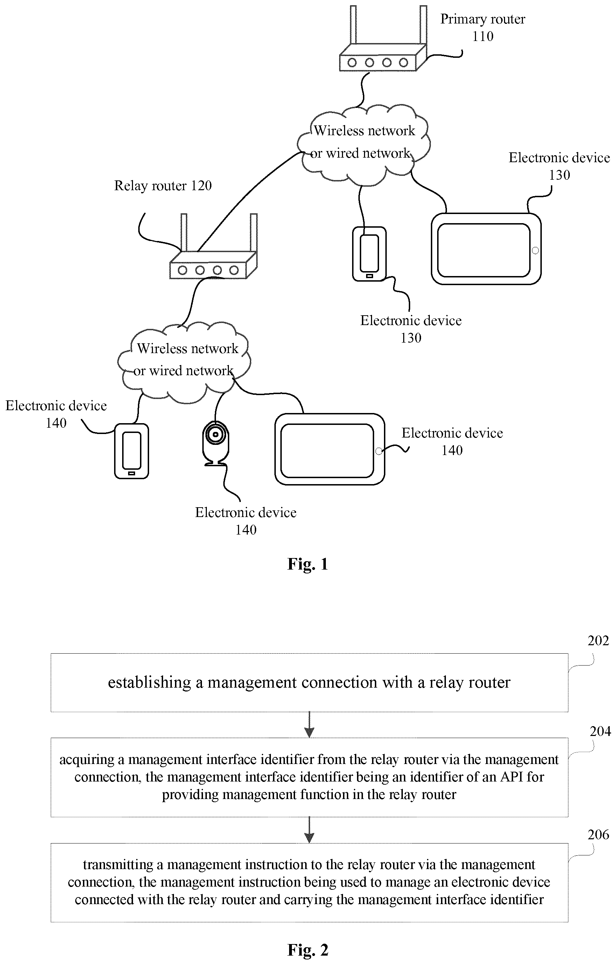

Fig. 1 is an environmental schematic diagram of implementation environment related to various embodiments according to the present disclosure. The implementation environment includes a wireless primary router 110, a wireless relay router 120 connected with the wireless primary router, an electronic device 130 connected with the wireless primary router, and an electronic device 140 connected with the wireless relay router.

The wireless primary router 110 may be an electronic provided with functions of data process and data transmission, which may be a router, a host enabling a function of routing by means of software, or the like.

The wireless primary router 110 may be connected with the electronic device 130, which is connected to the wireless primary router, via a wired network or a wireless network.

The electronic device 130 connected with the wireless primary router may be an electronic device provided with a function of wireless or wired network access, which may be a smart phone, a tablet computer, an e-book reader, an MP3 (Moving Picture Experts Group Audio Layer III) player, an MP4 (Moving Picture Experts Group Audio Layer IV) player, a smart camera, a smart socket, or the like.

The wireless primary router 110 may be connected with the wireless relay router 120 via a wired network or a wireless network.

The wireless relay router may be an electronic device provided with functions of data process and data transmission, configured to receive and forward data transmitted from the wireless primary router 110, which may be a router, a host enabling a function of routing by means of software, or the like.

The wireless relay router 120 may be connected with the electronic device 140, connected to the wireless relay router, via a wired or wireless network.

The electronic device 140 connected with the wireless relay router may be an electronic device provided with a function of wireless or wired network access, which may be a smart phone, a tablet computer, an e-book reader, an MP3 player, an MP4 player, a smart camera, a smart socket, or the like.

It should be noted that, there may be a plurality of wireless relay routers connected with the wireless primary router 110, and there may be other wireless relay router connected with the wireless relay router 120. However, the present embodiment is described with the implementation environment, in which there is only one wireless primary router and one wireless relay router, as an example, but is not limited thereto.

Fig. 2 is the flow chart of a method for device management, according to an exemplary embodiment. In the present embodiment, the method for device management is described as being applied to the wireless primary router 110 in Fig. 1, and may include following steps.

In step 202, establishing a management connection with a wireless relay router.

In step 204, acquiring a management interface identifier from the wireless relay router via the management connection, the management interface identifier being an identifier of an API for providing management function in the wireless relay router.

In step 206, transmitting a management instruction to the wireless relay router via the management connection, the management instruction being used to manage an electronic device connected with the wireless relay router and carrying the management interface identifier.

Alternatively, the establishing a management connection with a wireless relay router includes: receiving a connection request transmitted from the wireless relay router; and transmitting request acceptance information to the wireless relay router, and establishing the management connection with the wireless relay router.

Alternatively, the acquiring a management interface identifier from the wireless relay router via the management connection includes: transmitting a management interface acquiring request to the wireless relay router via the management connection; and receiving at least one management interface identifier transmitted via the management connection from the wireless relay router.

Alternatively, the method further includes: transmitting a private protocol message to the wireless relay router via the management connection; receiving a feedback message transmitted from the wireless relay router, the feedback message being fedback from the wireless relay router receiving the private protocol message; detecting whether the wireless relay router is compatible with the wireless primary router according to the feedback message; and performing the step of acquiring a management interface identifier from the wireless relay router via the management connection, if it is detected the wireless relay router is compatible with the wireless primary router.

Alternatively, the transmitting a management instruction to the wireless relay router via the management connection includes: acquiring a first interface identifier in the management interface identifier, the first interface identifier being an identifier of an API for acquiring information of the electronic device; transmitting a first management instruction carrying the first interface identifier, to the wireless relay router via the management connection, the wireless relay router being configured to acquire the first interface identifier in the first management instruction, and invoke the API corresponding to the first interface identifier to obtain information of at least one electronic device connected with the wireless relay router as first device information; receiving the first device information transmitted from the wireless relay router; and transmitting the first device information to a management device, the management device being configured to display the first device information.

Alternatively, the transmitting a management instruction to the wireless relay router via the management connection includes: acquiring a second interface identifier in the management interface identifier, the second interface identifier being an identifier of an API for controlling the electronic device; and transmitting a second management instruction carrying the second interface identifier to the wireless relay router via the management connection, the wireless relay router being configured to acquire the second interface identifier in the second management instruction, and invoke the API corresponding to the second interface identifier to control the electronic device connected with the wireless relay router.

Alternatively, the transmitting the first device information to a management device includes:
acquiring information of at least one electronic device connected with the wireless primary router as second device information; and transmitting the first device information and the second device information to the management device; wherein, the first device information includes at least one selected from a group consisting of a MAC address, an IP address, and connection status information of the electronic device connected with the wireless relay router; and
the second device information includes at least one selected from a group consisting of a MAC address, an IP address, and connection status information of the electronic device connected with the wireless primary router.

According to the method for device management provided by the exemplary embodiment, the management connection is established with the wireless relay router, the management interface identifier is acquired from the wireless relay router via the management connection, the management instruction carrying the management interface identifier is transmitted to the wireless relay router via the management connection and used to manage the electronic device connected with the wireless relay router. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

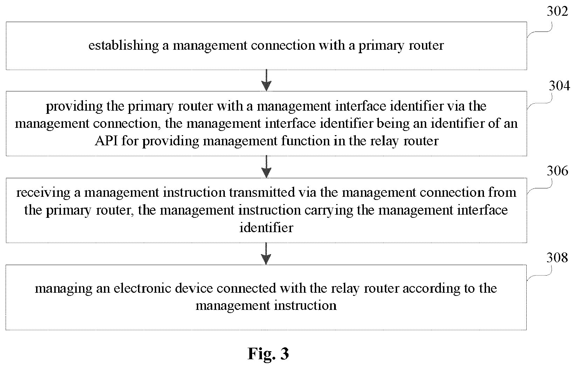

Fig. 3 is the flow chart of a method for device management, according to another exemplary embodiment. In the present embodiment, the method for device management is described as being applied to the wireless relay router 120 in Fig. 1, and may include following steps.

In step 302, establishing a management connection with a wireless primary router.

In step 304, providing the wireless primary router with a management interface identifier via the management connection, the management interface identifier being an identifier of an API for providing management function in the wireless relay router.

In step 306, receiving a management instruction transmitted via the management connection from the wireless primary router, the management instruction carrying the management interface identifier; and In step 308, managing an electronic device connected with the wireless relay router according to the management instruction.

Alternatively, the establishing a management connection with a wireless primary router includes:
transmitting a connection request to the wireless primary router; and receiving request acceptance information transmitted from the wireless primary router, and establishing the management connection with the wireless primary router.

Alternatively, the providing the wireless primary router with a management interface identifier via the management connection includes: receiving a management interface acquiring request transmitted via the management connection from the wireless primary router, the management interface acquiring request being transmitted from the wireless primary router detected to be compatible with the wireless relay router; and transmitting at least one management interface identifier to the wireless primary router via the management connection.

Alternatively, the method further includes: receiving a private protocol message transmitted from the wireless primary router; and transmitting a feedback message to the wireless primary router via the management connection, the wireless primary router being configured to detect whether the wireless primary router is compatible with the wireless relay router according to the feedback message.

Alternatively, the managing an electronic device connected with the wireless relay router according to the management instruction includes: acquiring a first interface identifier in a first management instruction, the first interface identifier being an identifier of an API for acquiring information of the electronic device; invoking the API corresponding to the first interface identifier to obtain information of at least one electronic device connected with the wireless relay router as first device information; and transmitting the first device information to the wireless primary router via the management connection, the first device information including at least one selected from a group consisting of a MAC address, an IP address, and connection status information of the electronic device connected with the wireless relay router.

Alternatively, the managing an electronic device connected with the wireless relay router according to the management instruction includes: acquiring a second interface identifier in a second management instruction, the second interface identifier being an identifier of an API for controlling the electronic device; and invoking the API corresponding to the second interface identifier to control the electronic device connected with the wireless relay router.

According to the method for device management provided by the exemplary embodiment, the management connection is established with the wireless primary router, the management interface identifier, as an identifier of an API for providing management function in the wireless relay router, is provided to the wireless primary router via the management connection, the management instruction carrying the management interface identifier is received from the wireless primary router via the management connection, and the electronic device connected with the wireless relay router is managed according to the management instruction. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

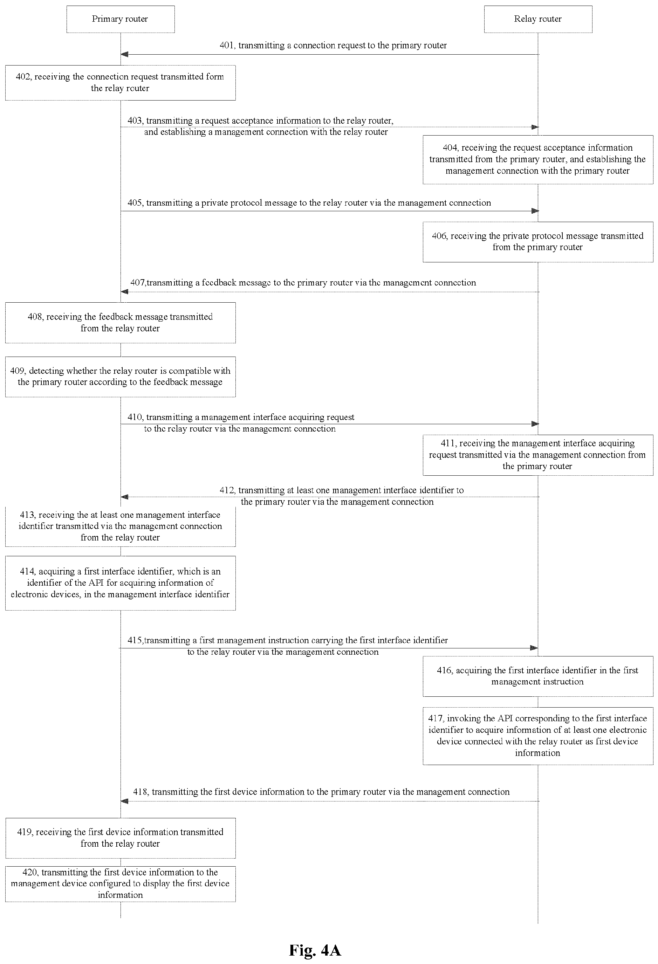

Fig. 4A is the flow chart of a method for device management, according to yet another exemplary embodiment. In the present embodiment, the method for device management is described as being applied to the implementation environment shown in Fig. 1, and may include following steps.

In step 401, the wireless relay router transmits a connection request to the wireless primary router.

A user may login to an administer interface of the wireless relay router using a management device, and activate a function of routing and relay of the wireless relay router to search for the wireless primary router nearby. When the wireless primary router is searched out, the administer interface of the wireless relay router may be displayed to prompt the user to input a password for connecting to the wireless primary router. After being input in the administer interface by the user, the password is transmitted from the wireless relay router to the wireless primary router and verified by the latter. If verification succeeds through the wireless primary router, the wireless relay router is connected with a wireless network provided by the wireless primary router.

In order to ensure security for the wireless primary router to manage electronic devices connected with the wireless relay router, the wireless relay router may initiatively transmit a connection request to a predetermined TCP (Transmission Control Protocol) port, which may be a port 80, of the wireless primary router after being connected with the wireless network provided by the wireless primary router, to request for establishing a management connection with the TCP port. Moreover, the management connection may be a persistent connection. As connection requests received at the wireless primary router may be transmitted from a plurality of wireless relay routers, the connection request may contain identification information of the wireless relay router for the wireless primary router to identify the wireless relay router.

In step 402, the wireless primary router receives the connection request transmitted form the wireless relay router.

Accordingly, the wireless primary router receives the connection request transmitted form the wireless relay router.

In step 403, the wireless primary router transmits request acceptance information to the wireless relay router, and establishes a management connection with the wireless relay router.

The wireless primary router acquires the identification information of the wireless relay router carried in the connection request, and detects whether the wireless relay router is connected with the wireless primary router according to the identification information. If it is detected that the wireless relay router is connected with the wireless primary router, the wireless primary router accepts the connection request, establishes the management connection with the wireless relay router through the predetermined TCP port, and transmits the request acceptance information to the wireless relay router so as to notify the wireless relay router of availability to establish the management connection with the wireless primary router.

In step 404, the wireless relay router receives the request acceptance information transmitted from the wireless primary router, and establishes the management connection with the wireless primary router.

The wireless relay router establishes the management connection through the predetermined TCP port of the wireless primary router upon reception of the request acceptance information transmitted from the wireless primary router. Since establishment of the management connection between the wireless relay router and the wireless primary router follows a three-way handshake protocol of TCP, the wireless relay router is required to transmit connection establishment information to the wireless primary router, to notify the wireless primary router of the establishment of the management connection, after establishing the management connection through the predetermined TCP port of the wireless primary router.

When the management connection is established between the wireless relay router and the wireless primary router, the wireless relay router would grant management authority to the wireless primary router, regarding the wireless primary router as a dependable device and regarding instructions or data transmitted via the management connection as being safe.

If there is a plurality of wireless relay routers connected with the wireless primary router, the wireless primary router may establish a management connection with each wireless relay router, respectively. The present embodiment is described with an example, in which only one wireless relay router is connected with the wireless primary router, but the present disclosure is not limited thereto.

In step 405, the wireless primary router transmits a private protocol message to the wireless relay router via the management connection.

After establishment of the management connection between the wireless relay router and the wireless primary router, the wireless primary router transmits a private protocol message to the wireless relay router via the management connection. The private protocol message is used to prompt the wireless relay router to transmit a feedback message carrying therein information such as a version number, a message transmission format of the wireless relay router and the like.

In step 406, the wireless relay router receives the private protocol message transmitted from the wireless primary router.

In step 407, the wireless relay router transmits a feedback message to the wireless primary router via the management connection.

The wireless relay router acquires its own information, such as the version number, the message transmission format and the like, according the private protocol message received, packages such information into a feedback message, and transmits the same to the wireless primary router via the management connection.

In step 408, the wireless primary router receives the feedback message transmitted from the wireless relay router.

The feedback message is fedback by the wireless relay router after it receives the private protocol message.

In step 409, the wireless primary router detects whether the wireless relay router is compatible with the wireless primary router according to the feedback message.

The wireless primary router acquires the information including the version number, the message transmission format and the like in the feedback message, and detects whether the wireless relay router is compatible with the wireless primary router according to the information. Specifically, information of compatible versions may be prestored in the wireless primary router, for example, in the form of a compatible version information table as shown by Table 1.

**Table 1**

| Version number | Message transmission format |
|---|---|
| Version A | Format A |
| Version B | Format B |

The wireless primary router searches for a matched item in the compatible version information table according to the information carried in the feedback message. If a matched item is searched out, it can be determined that the wireless relay router is compatible with the wireless primary router, and thus step 410 is performed. If no matched item is searched out, it can be determined that the wireless relay router is not compatible with the wireless primary router, and thus the wireless primary router can not manage electronic devices connected with the wireless relay router.

In step 410, the wireless primary router transmits a management interface acquiring request to the wireless relay router via the management connection.

The wireless relay router may be provided in advance with at least one management interface, which may be an API interface. Various management functions, including functions of information acquiring, black and white list, timing switch, access restriction and the like, are provided by different management interfaces. The wireless relay router may perform management to accessed electronic devices by invoking the various management interfaces.

For example, a management interface invoked by the wireless relay router is provided with the function of information acquiring as the management function. The wireless relay router may acquire device information, connection status information, operating status information and the like of electronic devices connected with the wireless relay router by invoking the management interface.

For another example, a management interface invoked by the wireless relay router is provided with the function of access restriction as the management function. The wireless relay router may disable accessibility to Internet for a part or whole of the electronic devices connected with the wireless relay router by invoking the management interface.

In order to manage the electronic devices connected with the wireless relay router, the wireless primary router is required to know about management interfaces provided by the replay router. Therefore, the wireless primary router may request for acquiring a management interface identifier of the wireless relay router by transmitting the management interface acquiring request to the wireless relay router via the management connection.

Since wireless relay routers are provided with different management interfaces, the wireless primary router is required to transmit a management interface acquiring request to each wireless relay router, respectively, if there is a plurality of wireless relay routers connected with the wireless primary router.

In step 411, the wireless relay router receives the management interface acquiring request transmitted via the management connection from the wireless primary router.

In step 412, the wireless relay router transmits at least one management interface identifier to the wireless primary router via the management connection.

The management interface acquiring request is transmitted via the management connection, so it may be regarded as being safe by the wireless relay router. Corresponding relation between management interface identifiers and management interfaces may be prestored in the wireless relay router, for example, in the form of an interface identifier table as shown by Table 2.

**Table 2**

| Management interface identifier | Management interface |
|---|---|
| Management interface A | API for acquiring information |
| Management interface B | API for setting black and white lists |
| Management interface C | API for timing switch |
| Management interface D | API for access restriction |

Wherein, the management interface identifier may be an identifier of an API for providing the management function in the wireless relay router.

The wireless relay router acquires at least one management interface identifier according to the management interface acquiring request received, and transmits the management interface identifier to the wireless primary router via the management connection.

In step 413, the wireless primary router receives the at least one management interface identifier transmitted via the management connection from the wireless relay router.

Correspondingly, the wireless primary router receives the management interface identifier transmitted from the wireless relay router. For ease of subsequent usage, the management interface identifier received may be saved, and a corresponding relation between the management interface identifier and the wireless relay router may be recorded, by the wireless primary router. If there are management interface identifiers received by the wireless primary router from a plurality of wireless relay routers, the corresponding relation between the management interface identifiers and the wireless relay routers may be, for example, stored in a table as shown by Table 3.

**Table 3**

| Wireless relay router identifier | Management interface identifier |
|---|---|
| Wireless relay router 1 | Management interface A, Management interface B, Management interface C, Management interface D |
| Wireless relay router 2 | Management interface A, Management interface B, Management interface C |
| Wireless relay router 3 | Management interface A, Management interface C |

By this time, the wireless primary router is granted with the management authority of the wireless relay router, and thus is able to manage electronic devices connected with the wireless relay router via the management connection established with the wireless relay router.

In step 414, the wireless primary router acquires a first interface identifier, which is an identifier of the API for acquiring information of electronic devices, in the management interface identifier.

If a user intends to manage the electronic devices connected with the wireless relay router using the wireless primary router, he/she may access the wireless primary router through a management device, and login to an administer interface of the wireless primary router, upon inputting a username and a password, so as to issue a corresponding instruction to the wireless primary router. The wireless primary router may search for corresponding management interface identifier in the table as shown by Table 3 according to the instruction received.

For example, if the user intends to acquire information of the electronic devices connected with the wireless relay router, he/she may issue a corresponding instruction to the wireless primary router through the management device. Accordingly, the wireless primary router may search for an identifier of the API for acquiring information of electronic devices, that is, the first interface identifier, among the management interface identifiers according to the instruction.

If there is a plurality of wireless relay routers connected with the wireless primary router, the wireless primary router is required to firstly determine the wireless relay router to be managed before acquiring the corresponding management interface identifier among the management interface identifiers provided by the wireless relay router.

In step 415, the wireless primary router transmits a first management instruction carrying the first interface identifier to the wireless relay router via the management connection.

In step 416, the wireless relay router acquires the first interface identifier in the first management instruction.

The wireless relay router acquires the first interface identifier carried in the first management instruction received, and determines, according to the first interface identifier, that the API to be invoked is the API for acquiring information of electronic devices.

In step 417, the wireless relay router invokes the API corresponding to the first interface identifier to acquire information of at least one electronic device connected with the wireless relay router as first device information.

The first device information includes a MAC address, an IP address, connection status information and the like of the electronic device connected with the wireless relay router. Wherein, the connection status information of an electronic device indicates whether the electronic device is connected, a time length for the electronic device in connection with the wireless relay router, data volume of receiving and transmission, and the like.

If the wireless relay router has management authority of the electronic devices connected thereto, the wireless relay router may also acquire colleted data and current operation condition information of the electronic devices, and transmit the same to the wireless primary router as the first device information.

For example, the wireless relay router has management authority of an air purifier connected thereto. Accordingly, the wireless relay router may acquire data related to current air quality collected by the air purifier and data on current operation mode thereof, and transmit the same to the wireless primary router via the management connection.

In step 418, the wireless relay router transmits the first device information to the wireless primary router via the management connection.

It should be noted that, upon connection or disconnection of an electronic device with the wireless relay router, the wireless relay router would transmit the latest first device information to the wireless primary router via the management connection, to notify the wireless primary router of updating the first device information.

In step 419, the wireless primary router receives the first device information transmitted from the wireless relay router.

In step 420, the wireless primary router transmits the first device information to the management device configured to display the first device information.

The wireless primary router acquires the first device information transmitted from the wireless relay router by transmitting the first management instruction carrying the first interface identified to the wireless relay router, and transmits the first device information to the management device by which the first device information is displayed.

In order for the user to know about information of both electronic devices connected to the wireless primary router and that connected to the wireless relay router, the step 420 may include following substeps.
1) The wireless primary router acquires information of at least one electronic device connected with the wireless primary router as second device information.
   The second device information may include a MAC address, an IP address, connection status information and the like of an electronic device connected with the wireless primary router. Wherein, the connection status information of an electronic device indicates a time length for the electronic device in connection with the wireless primary router, data volume of receiving and transmission, and the like.
2) The wireless primary router transmits the first and second device information to the management device.

The wireless primary router transmits both the first device information and the second device information acquired to the management device, by which the received information may be displayed. In order for the user to distinguish electronic devices connected with the wireless primary router from those connected with the wireless relay router more clearly, identifiers of routers may be added into the first and second device information transmitted by the wireless primary router. Accordingly, the management device may classify the first and second device information according to the identifiers of routers, enable the user to get better acquainted with connection condition of electronic devices.

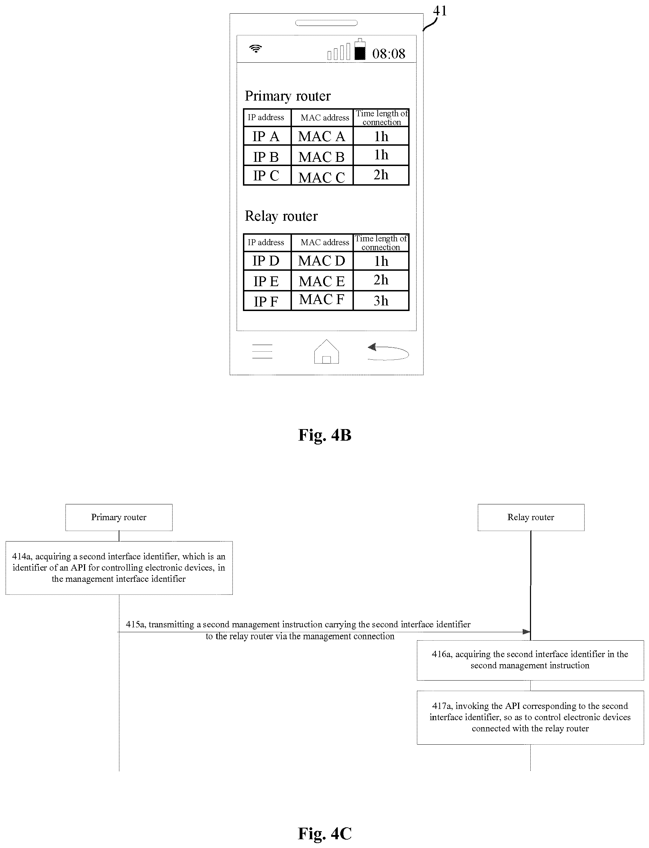

For example, as shown in Fig. 4B, the first and second device information received is displayed in the form of a list by the management device 41.

For various management functions corresponding to different management interfaces, if there is an identifier of an API for controlling electronic devices among the management interface identifiers provided from the wireless relay router to the wireless primary router, the wireless primary router may transmits a management instruction, carrying the identifier of the API for controlling electronic devices, to the wireless relay router via the management connection, so as to control the electronic devices connected with the wireless relay router.

As a possible implementation manner, the steps 414-420 may be replaced by steps 414a-417a, as shown in Fig. 4C.

In step 414a, the wireless primary router acquires a second interface identifier, which is an identifier of an API for controlling electronic devices, among the management interface identifiers.

For example, there is an identifier of an API for controlling a smart socket contained among the management interface identifiers provided by the wireless relay router. If a user intends to set power on/off of the smart socket through the wireless primary router, he/she may issue a corresponding instruction to the wireless primary router via the management connection. Then, the wireless primary router may search out the identifier of the API for controlling the smart socket among the management interface identifiers, and determine the one searched out as the second interface identifier.

In step 415a, the wireless primary router transmits a second management instruction carrying the second interface identifier to the wireless relay router via the management connection.

If the user intends to control a specified electronic device, an identifier of the specified electronic device, for example, a MAC address thereof, may be carried in the second management instruction. Then, the wireless relay router controls the specified electronic device according to the identifier thereof.

In step 416a, the wireless relay router acquires the second interface identifier in the second management instruction.

The wireless relay router acquires the second interface identifier carried in the second management instruction, and determines the API to be invoked according to the second interface identifier.

For example, the second interface identifier acquired by the wireless relay router is the identifier of the API for controlling the smart socket, thus it can be determined that the API for controlling the smart socket is to be invoked.

In step 417a, the wireless relay router invokes the API corresponding to the second interface identifier, so as to control electronic devices connected with the wireless relay router.

If there is an identifier of an electronic device in the second management instruction, the wireless relay router would manage the electronic device corresponding to the identifier by invoking the API corresponding to the second interface identifier.

For example, if the user intends to control a specified smart socket A, the identifier of the API for controlling the smart socket as well as a MAC address of the smart socket A may be carried in the second management instruction transmitted from the wireless primary router to the wireless relay router. Then, the wireless relay router may control the smart socket A, according to the MAC address, by invoking the API for controlling the smart socket.

According to the method for device management provided by the exemplary embodiment, the management connection is established with the wireless relay router, the management interface identifier is acquired from the wireless relay router via the management connection, the management instruction carrying the management interface identifier is transmitted to the wireless relay router via the management connection and used to manage the electronic device connected with the wireless relay router. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

In addition, according to the present embodiment, after establishment of the management connection between the wireless primary router and the wireless relay router, the wireless primary router transmits a private protocol message to the wireless relay router, detects whether the wireless relay router is compatible the wireless primary router according to the feedback message transmitted from the wireless relay router, and acquires the management interface of the wireless relay router if the wireless primary router is compatible with the wireless relay router, thus a result that the wireless primary router is only able to manage electronic devices connected with compatible wireless relay routers may be obtained.

Further, according to the present embodiment, the wireless primary router transmits the first management instruction carrying the first interface identifier to the wireless relay router, then the wireless relay router acquires information of the electronic devices connected with the wireless relay router according to the first interface identifier, and transmits the information to the wireless primary router. Therefore, a user is able to know about information of electronic devices connected with the wireless relay router merely by loginning to the wireless primary router through the management device, thus efficiency for management of electronic devices connected with routers can be improved.

Moreover, according to the present embodiment, the wireless primary router transmits the second management instruction carrying the second interface identifier to the wireless relay router, then the wireless relay router controls electronic devices connected thereto by invoking the API for controlling electronic devices according to the second interface identifier. Therefore, a user is able to control electronic devices connected with the wireless relay router through the wireless primary router, thus efficiency for management of electronic devices connected with routers can be improved.

Embodiments of an apparatus according to the present disclosure are described as follows, which can be used to implement the embodiments of a method according to the present disclosure. For those details not elaborated in the embodiments of an apparatus according to the present disclosure, the embodiments of a method according to the present disclosure may be referred to.

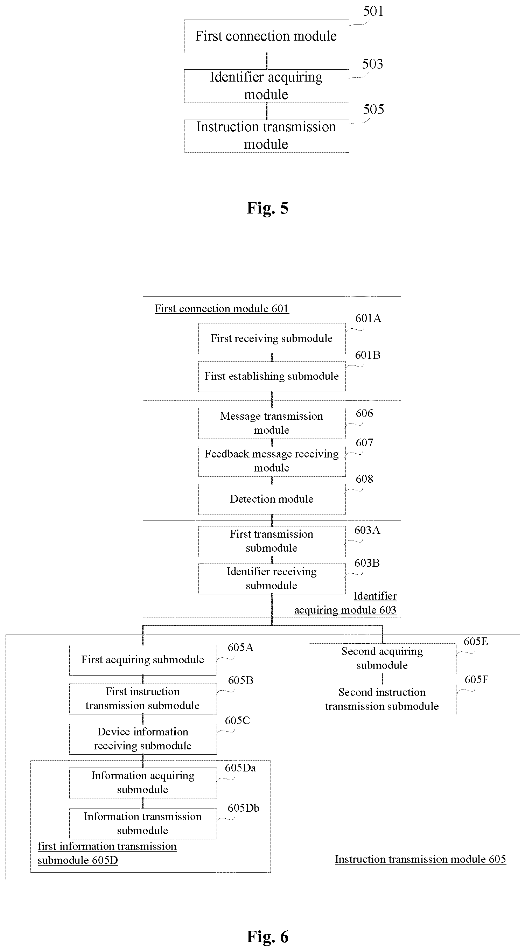

Fig. 5 is a block diagram illustrating an apparatus for device management, according to an exemplary embodiment. The apparatus for device management may be implemented as a part or whole of a wireless primary router by means of software, hardware or combination thereof. The apparatus for device management may include: a first connection module 501, configured to establish a management connection with a wireless relay router; an identifier acquiring module 503, configured to acquire a management interface identifier from the wireless relay router via the management connection established by the first connection module 501, the management interface identifier being an identifier of an API for providing management function in the wireless relay router; and an instruction transmission module 505, configured to transmit a management instruction to the wireless relay router via the management connection established by the first connection module 501, the management instruction being used to manage an electronic device connected with the wireless relay router and carrying the management interface identifier.

According to the apparatus for device management provided by the exemplary embodiment, the management connection is established with the wireless relay router, the management interface identifier is acquired from the wireless relay router via the management connection, the management instruction carrying the management interface identifier is transmitted to the wireless relay router via the management connection and used to manage the electronic device connected with the wireless relay router. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

Fig. 6 is a block diagram illustrating an apparatus for device management, according to another exemplary embodiment. The apparatus for device management may be implemented as a part or whole of a wireless primary router by means of software, hardware or combination thereof. The apparatus for device management may include: a first connection module 601, configured to establish a management connection with a wireless relay router; an identifier acquiring module 603, configured to acquire a management interface identifier from the wireless relay router via the management connection established by the first connection module 601, the management interface identifier being an identifier of an API for providing management function in the wireless relay router; and an instruction transmission module 605, configured to transmit a management instruction to the wireless relay router via the management connection established by the first connection module 601, the management instruction being used to manage an electronic device connected with the wireless relay router and carrying the management interface identifier.

Alternatively, the first connection module 601 includes: a first receiving submodule 601A, configured to receive a connection request transmitted from the wireless relay router; and a first establishing submodule 601B, configured to transmit request acceptance information to the wireless relay router, and establish the management connection with the wireless relay router.

Alternatively, the identifier acquiring module 603 includes: a first transmission submodule 603A, configured to transmit a management interface acquiring request to the wireless relay router via the management connection; and an identifier receiving submodule 603B, configured to receive at least one management interface identifier transmitted via the management connection from the wireless relay router.

Alternatively, the apparatus further includes: a message transmission module 606, configured to transmit a private protocol message to the wireless relay router via the management connection; a feedback message receiving module 607, configured to receive a feedback message transmitted from the wireless relay router, the feedback message being fedback from the wireless relay router receiving the private protocol message; and a detection module 608, configured to detect whether the wireless relay router is compatible with the wireless primary router according to the feedback message received by the feedback message receiving module 607; the detection module 608 is further configured to, if it is detected the wireless relay router is compatible with the wireless primary router, perform the step of acquiring a management interface identifier from the wireless relay router via the management connection.

Alternatively, the instruction transmission module 605 includes: a first acquiring submodule 605A, configured to acquire a first interface identifier in the management interface identifier, the first interface identifier being an identifier of an API for acquiring information of the electronic device; a first instruction transmission submodule 605B, configured to transmit a first management instruction, carrying the first interface identifier acquired by the first acquiring submodule 605A, to the wireless relay router via the management connection, the wireless relay router being configured to acquire the first interface identifier in the first management instruction, and invoke the API corresponding to the first interface identifier to obtain information of at least one electronic device connected with the wireless relay router as first device information; a device information receiving submodule 605C, configured to receive the first device information transmitted from the wireless relay router; and a first information transmission submodule 605D, configured to transmit the first device information received by the device information receiving submodule 605C to a management device, the management device being configured to display the first device information.

Alternatively, the instruction transmission module 605 includes: a second acquiring submodule 605E, configured to acquire a second interface identifier in the management interface identifier, the second interface identifier being an identifier of an API for controlling the electronic device; and a second instruction transmission submodule 605F, configured to transmit a second management instruction, carrying the second interface identifier acquired by the second acquiring submodule 605E, to the wireless relay router via the management connection, the wireless relay router being configured to acquire the second interface identifier in the second management instruction, and invoke the API corresponding to the second interface identifier to control the electronic device connected with the wireless relay router.

Alternatively, the first information transmission submodule 605D includes: an information acquiring submodule 605Da, configured to acquire information of at least one electronic device connected with the wireless primary router as second device information; and an information transmission submodule 605Db, configured to transmit the first device information, and the second device information acquired by the information acquiring submodule 605Da, to the management device; wherein, the first device information includes at least one selected from a group consisting of a MAC address, an IP address, and connection status information of the electronic device connected with the wireless relay router; and the second device information includes at least one selected from a group consisting of a MAC address, an IP address, and connection status information of the electronic device connected with the wireless primary router.

According to the apparatus for device management provided by the exemplary embodiment, the management connection is established with the wireless relay router, the management interface identifier is acquired from the wireless relay router via the management connection, the management instruction carrying the management interface identifier is transmitted to the wireless relay router via the management connection and used to manage the electronic device connected with the wireless relay router. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

According to the present embodiment, after establishment of the management connection between the wireless primary router and the wireless relay router, the wireless primary router transmits a private protocol message to the wireless relay router, detects whether the wireless relay router is compatible the wireless primary router according to the feedback message transmitted from the wireless relay router, and acquires the management interface of the wireless relay router if the wireless primary router is compatible with the wireless relay router, thus a result that the wireless primary router is only able to manage electronic devices connected with compatible wireless relay routers may be obtained.

According to the present embodiment, the wireless primary router transmits the first management instruction carrying the first interface identifier to the wireless relay router, then the wireless relay router acquires information of the electronic devices connected with the wireless relay router according to the first interface identifier, and transmits the information to the wireless primary router. Therefore, a user is able to know about information of electronic devices connected with the wireless relay router merely by loginning to the wireless primary router through the management device, thus efficiency for management of electronic devices connected with routers can be improved.

According to the present embodiment, the wireless primary router transmits the second management instruction carrying the second interface identifier to the wireless relay router, then the wireless relay router controls electronic devices connected thereto by invoking the API for controlling electronic devices according to the second interface identifier. Therefore, a user is able to control electronic devices connected with the wireless relay router through the wireless primary router, thus efficiency for management of electronic devices connected with routers can be improved.

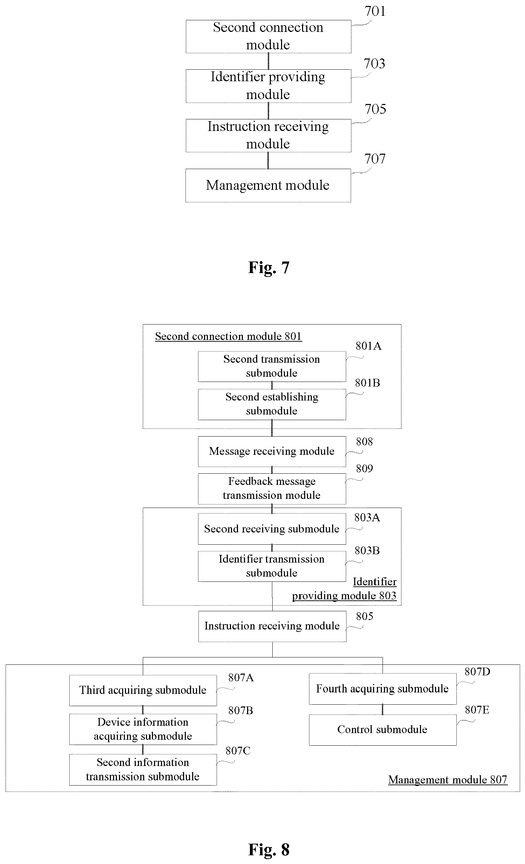

Fig. 7 is a block diagram illustrating an apparatus for device management, according to yet another exemplary embodiment. The apparatus for device management may be implemented as a part or whole of a wireless relay router by means of software, hardware or combination thereof. The apparatus for device management may include: a second connection module 701, configured to establish a management connection with a wireless primary router; an identifier providing module 703, configured to provide the wireless primary router with a management interface identifier via the management connection established by the second connection module, the management interface identifier being an identifier of an API for providing management function in the wireless relay router; an instruction receiving module 705, configured to receive a management instruction transmitted via the management connection from the wireless primary router, the management instruction carrying the management interface identifier; and a management module 707, configured to manage an electronic device connected with the wireless relay router according to the management instruction received by the instruction receiving module.

According to the apparatus for device management provided by the exemplary embodiment, the management connection is established with the wireless primary router, the management interface identifier is provided to the wireless primary router via the management connection, the management instruction carrying the management interface identifier is received from the wireless primary router via the management connection, and the electronic device connected with the wireless relay router is managed according to the management instruction. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

Fig. 8 is a block diagram illustrating an apparatus for device management, according to still another exemplary embodiment. The apparatus for device management may be implemented as a part or whole of a wireless relay router by means of software, hardware or combination thereof. The apparatus for device management may include: a second connection module 801, configured to establish a management connection with a wireless primary router; an identifier providing module 803, configured to provide the wireless primary router with a management interface identifier via the management connection established by the second connection module 801, the management interface identifier being an identifier of an API for providing management function in the wireless relay router; an instruction receiving module 805, configured to receive a management instruction transmitted via the management connection from the wireless primary router, the management instruction carrying the management interface identifier; and a management module 807, configured to manage an electronic device connected with the wireless relay router according to the management instruction received by the instruction receiving module.

Alternatively, the second connection module 801 includes: a second transmission submodule 801A, configured to transmit a connection request to the wireless primary router; and a second establishing submodule 801B, configured to receive request acceptance information transmitted from the wireless primary router, and establish the management connection with the wireless primary router.

Alternatively, the identifier providing module 803 includes: a second receiving submodule 803A, configured to receive a management interface acquiring request transmitted via the management connection from the wireless primary router, the management interface acquiring request being transmitted from the wireless primary router detected to be compatible with the wireless relay router; and
an identifier transmission submodule 803B, configured to transmit at least one management interface identifier to the wireless primary router via the management connection.

Alternatively, the apparatus further includes: a message receiving module 808, configured to receive a private protocol message transmitted from the wireless primary router; and a feedback message transmission module 809, configured to transmit a feedback message to the wireless primary router via the management connection, the wireless primary router being configured to detect whether the wireless primary router is compatible with the wireless relay router according to the feedback message.

Alternatively, the management module 807 includes: a third acquiring submodule 807A, configured to acquire a first interface identifier in a first management instruction, the first interface identifier being an identifier of an API for acquiring information of the electronic device; a device information acquiring submodule 807B, configured to invoke the API corresponding to the first interface identifier acquired by the third acquiring submodule 807A to obtain information of at least one electronic device connected with the wireless relay router as first device information; and a second information transmission submodule 807C, configured to transmit the first device information acquired by the device information acquiring submodule 807B to the wireless primary router via the management connection, the first device information including at least one selected from a group consisting of a MAC address, an IP address, and connection status information of the electronic device connected with the wireless relay router.

Alternatively, the management module 807 includes: a fourth acquiring submodule 807D, configured to acquire a second interface identifier in a second management instruction, the second interface identifier being an identifier of an API for controlling the electronic device; and a control submodule 807E, configured to invoke the API corresponding to the second interface identifier acquired by the fourth acquiring submodule 807D to control the electronic device connected with the wireless relay router.

According to the apparatus for device management provided by the exemplary embodiment, the management connection is established with the wireless primary router, the management interface identifier is provided to the wireless primary router via the management connection, the management instruction carrying the management interface identifier is received from the wireless primary router via the management connection, and the electronic device connected with the wireless relay router is managed according to the management instruction. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

According to the present embodiment, after establishment of the management connection between the wireless primary router and the wireless relay router, the wireless primary router transmits a private protocol message to the wireless relay router, detects whether the wireless relay router is compatible the wireless primary router according to the feedback message transmitted from the wireless relay router, and acquires the management interface of the wireless relay router if the wireless primary router is compatible with the wireless relay router, thus a result that the wireless primary router is only able to manage electronic devices connected with compatible wireless relay routers may be obtained.

According to the present embodiment, the wireless primary router transmits the first management instruction carrying the first interface identifier to the wireless relay router, then the wireless relay router acquires information of the electronic devices connected with the wireless relay router according to the first interface identifier, and transmits the information to the wireless primary router. Therefore, a user is able to know about information of electronic devices connected with the wireless relay router merely by logging in to the wireless primary router through the management device, thus efficiency for management of electronic devices connected with routers can be improved.

According to the present embodiment, the wireless primary router transmits the second management instruction carrying the second interface identifier to the wireless relay router, then the wireless relay router controls electronic devices connected thereto by invoking the API for controlling electronic devices according to the second interface identifier. Therefore, a user is able to control electronic devices connected with the wireless relay router through the wireless primary router, thus efficiency for management of electronic devices connected with routers can be improved.

According to an exemplary embodiment of the present disclosure, there is also provided an apparatus for device management, which is applicable to a wireless primary router, and includes:
a processor; and a memory for storing instructions executable by the processor; wherein the processor is configured to perform: establishing a management connection with a wireless relay router; acquiring a management interface identifier from the wireless relay router via the management connection, the management interface identifier being an identifier of an API for providing management function in the wireless relay router; and transmitting a management instruction to the wireless relay router via the management connection, the management instruction being used to manage an electronic device connected with the wireless relay router and carrying the management interface identifier.

Alternatively, the establishing a management connection with a wireless relay router includes: receiving a connection request transmitted from the wireless relay router; and transmitting request acceptance information to the wireless relay router, and establishing the management connection with the wireless relay router.

Alternatively, the acquiring a management interface identifier from the wireless relay router via the management connection includes: transmitting a management interface acquiring request to the wireless relay router via the management connection; and receiving at least one management interface identifier transmitted via the management connection from the wireless relay router.

Alternatively, the method further includes: transmitting a private protocol message to the wireless relay router via the management connection; receiving a feedback message transmitted from the wireless relay router, the feedback message being fedback from the wireless relay router receiving the private protocol message; detecting whether the wireless relay router is compatible with the wireless primary router according to the feedback message; and performing the step of acquiring a management interface identifier from the wireless relay router via the management connection, if it is detected the wireless relay router is compatible with the wireless primary router.

Alternatively, the transmitting a management instruction to the wireless relay router via the management connection includes: acquiring a first interface identifier in the management interface identifier, the first interface identifier being an identifier of an API for acquiring information of the electronic device; transmitting a first management instruction carrying the first interface identifier to the wireless relay router via the management connection, the wireless relay router being configured to acquire the first interface identifier in the first management instruction, and invoke the API corresponding to the first interface identifier to obtain information of at least one electronic device connected with the wireless relay router as first device information; receiving the first device information transmitted from the wireless relay router; and transmitting the first device information to a management device, the management device being configured to display the first device information.

Alternatively, the transmitting a management instruction to the wireless relay router via the management connection includes: acquiring a second interface identifier in the management interface identifier, the second interface identifier being an identifier of an API for controlling the electronic device; and transmitting a second management instruction carrying the second interface identifier to the wireless relay router via the management connection, the wireless relay router being configured to acquire the second interface identifier in the second management instruction, and invoke the API corresponding to the second interface identifier to control the electronic device connected with the wireless relay router.

Alternatively, the transmitting the first device information to a management device includes:
acquiring information of at least one electronic device connected with the wireless primary router as second device information; and transmitting the first device information and the second device information to the management device; wherein, the first device information includes at least one selected from a group consisting of a MAC address, an IP address, and connection status information of the electronic device connected with the wireless relay router; and
the second device information includes at least one selected from a group consisting of a MAC address, an IP address, and connection status information of the electronic device connected with the wireless primary router.

According to the method for device management provided by the exemplary embodiment, the management connection is established with the wireless relay router, the management interface identifier is acquired from the wireless relay router via the management connection, the management instruction carrying the management interface identifier is transmitted to the wireless relay router via the management connection and used to manage the electronic device connected with the wireless relay router. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

According to an exemplary embodiment of the present disclosure, there is also provided an apparatus for device management, which is applicable to a wireless relay router, and includes: a processor; and a memory for storing instructions executable by the processor; wherein the processor is configured to perform: establishing a management connection with a wireless primary router; providing the wireless primary router with a management interface identifier via the management connection, the management interface identifier being an identifier of an Application Programming Interface API for providing management function in the wireless relay router; receiving a management instruction transmitted via the management connection from the wireless primary router, the management instruction carrying the management interface identifier; and managing an electronic device connected with the wireless relay router according to the management instruction.

Alternatively, the establishing a management connection with a wireless primary router includes: transmitting a connection request to the wireless primary router; and receiving request acceptance information transmitted from the wireless primary router, and establishing the management connection with the wireless primary router.

Alternatively, the providing the wireless primary router with a management interface identifier via the management connection includes: receiving a management interface acquiring request transmitted via the management connection from the wireless primary router, the management interface acquiring request being transmitted from the wireless primary router detected to be compatible with the wireless relay router; and transmitting at least one management interface identifier to the wireless primary router via the management connection.

Alternatively, the method further includes: receiving a private protocol message transmitted from the wireless primary router; and transmitting a feedback message to the wireless primary router via the management connection, the wireless primary router being configured to detect whether the wireless primary router is compatible with the wireless relay router according to the feedback message.

Alternatively, the managing an electronic device connected with the wireless relay router according to the management instruction includes: acquiring a first interface identifier in a first management instruction, the first interface identifier being an identifier of an API for acquiring information of the electronic device;
invoking the API corresponding to the first interface identifier to obtain information of at least one electronic device connected with the wireless relay router as first device information; and transmitting the first device information to the wireless primary router via the management connection, the first device information including at least one selected from a group consisting of a MAC address, an IP address, and connection status information of the electronic device connected with the wireless relay router.

Alternatively, the managing an electronic device connected with the wireless relay router according to the management instruction includes: acquiring a second interface identifier in a second management instruction, the second interface identifier being an identifier of an API for controlling the electronic device; and invoking the API corresponding to the second interface identifier to control the electronic device connected with the wireless relay router.

According to the method for device management provided by the exemplary embodiment, the management connection is established with the wireless primary router, the management interface identifier, as an identifier of an API for providing management function in the wireless relay router, is provided to the wireless primary router via the management connection, the management instruction carrying the management interface identifier is received from the wireless primary router via the management connection, and the electronic device connected with the wireless relay router is managed according to the management instruction. For a case in which there are wireless relay routers connected with the wireless primary router, a problem that users are not able to view and manage electronic devices connected with the wireless relay router by logging to the wireless primary router can be resolved; so the electronic devices connected with the wireless relay router can be managed via the wireless primary router, and thus efficiency for management of electronic devices connected with routers can be improved.

With respect to the device in the above embodiments, the specific manners for performing operations for individual modules therein have been described in detail in the embodiments regarding the method, which will not be elaborated herein.

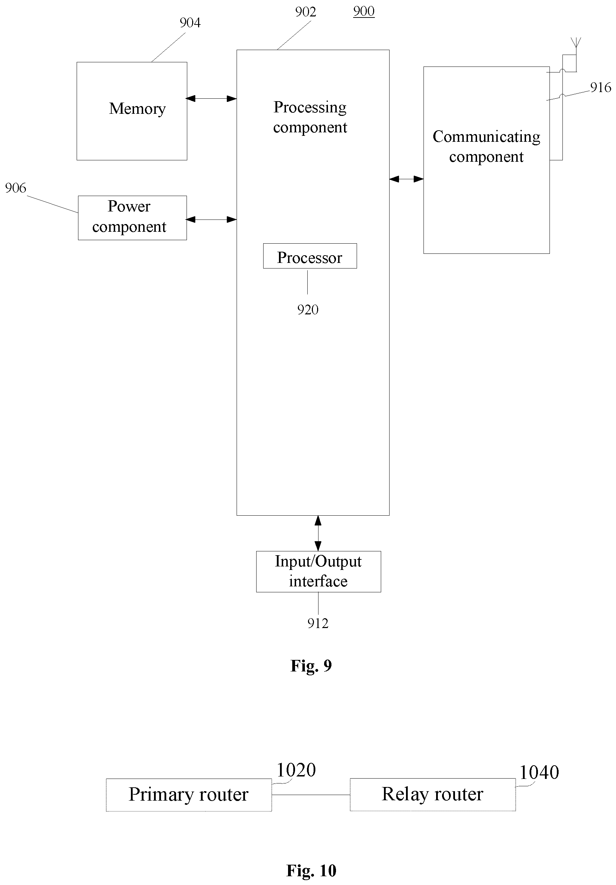

Fig. 9 is a block diagram of an apparatus for device management, according to an exemplary embodiment. For example, the apparatus 900 may be a wireless primary router or a wireless relay router.

Referring to Fig. 9, the device 900 may include one or more of the following components: a processing component 902, a memory 904, a power component 906, an input/output (I/O) interface 908, and a communication component 910.

The processing component 902 typically controls overall operations of the apparatus 900. The processing component 902 may include one or more processors 920 to execute instructions to perform all or part of the steps in the above described methods. Moreover, the processing component 902 may include one or more modules which facilitate the interaction between the processing component 902 and other components.

The memory 904 is configured to store various types of data to support the operation of the apparatus 900. Examples of such data include instructions for any applications or methods operated on the apparatus 900. The memory 904 may be implemented using any type of volatile or non-volatile memory apparatuss, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power management system, one or more power sources, and any other components associated with the generation, management, and distribution of power in the apparatus 900.

The I/O interface 908 provides an interface between the processing component 902 and peripheral interface modules.

The communication component 910 is configured to facilitate communication, wired or wirelessly, between the apparatus 900 and other apparatuses. In one exemplary embodiment, the communication component 910 receives a broadcast signal or broadcast associated information from an external broadcast management system via a broadcast channel. In one exemplary embodiment, the communication component 910 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing apparatuss (DSPDs), programmable logic apparatuss (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the apparatus 900, for performing the above-described methods. For example, the non-transitory computer-readable storage medium may be a ROM, a RAM, a CD-ROM, a magnetic tape, a floppy disc, an optical data storage apparatus, and the like.

A non-transitory computer-readable storage medium including instructions, executable by the processor of the apparatus 900, to enable the apparatus 900 to perform the above-described methods for device management.

Referring to Fig. 10, which is a block diagram of a network system, according to an exemplary embodiment, the network system includes a wireless primary router 1020 and a wireless relay router 1040, the wireless primary router 1020 is connected with the wireless relay router 1040 via a wireless network or a wired network; the wireless primary router 1020 may include an apparatus for device management according to any one embodiment as shown by Figs. 5 and 6; and the wireless relay router 1040 may include an apparatus for device management according to any one embodiment as shown by Figs. 7 and 8.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a the invention being defined by the following claims.

## Claims

1. A method for device management, applicable to a wireless primary router (110, 1020), comprising:
establishing (202) a management connection with a wireless relay router (120, 1040), distinct from the wireless primary router;
acquiring (204) at least one management interface identifier from the wireless relay router (120, 1040) via the management connection, the at least one management interface identifier being an identifier of an Application Programming Interface API for providing a management function in the wireless relay router (120, 1040); and
transmitting (206) a management instruction to the wireless relay router (120, 1040) via the management connection, the management instruction being used to manage an electronic device (130, 140) connected with the wireless relay router (120, 1040) and carrying the at least one management interface identifier.

2. The method according to claim 1, wherein the establishing a management connection with a wireless relay router (120, 1040) comprises:
receiving (402) a connection request transmitted from the wireless relay router (120, 1040); and
transmitting (403) request acceptance information to the wireless relay router (120, 1040), and establishing the management connection with the wireless relay router (120, 1040).

3. The method according to claim 1, wherein the acquiring a management interface identifier from the wireless relay router (120, 1040) via the management connection comprises:
transmitting (410) a management interface acquiring request to the wireless relay router (120, 1040) via the management connection; and
receiving (413) at least one management interface identifier transmitted via the management connection from the wireless relay router (120, 1040).

4. The method according to any one of claims 1 to 3, comprising:
transmitting (405) a private protocol message to the wireless relay router (120, 1040) via the management connection;
receiving (408) a feedback message transmitted from the wireless relay router (120, 1040), the feedback message being fedback from the wireless relay router (120, 1040) after the wireless relay router (120, 1040) receives the private protocol message;
detecting (409) whether the wireless relay router (120, 1040) is compatible with the wireless primary router (110, 1020) according to the feedback message; and
performing the acquiring a management interface identifier from the wireless relay router (120, 1040) via the management connection, when the wireless relay router (120, 1040) is detected as being compatible with the wireless primary router (110, 1020).

5. The method according to claim 1, wherein the transmitting a management instruction to the wireless relay router (120, 1040) via the management connection comprises:
acquiring (414) a first interface identifier among the at least one management interface identifiers, the first interface identifier being an identifier of an API for acquiring information of the electronic device;
transmitting (415) a first management instruction carrying the first interface identifier to the wireless relay router (120, 1040) via the management connection, the wireless relay router (120, 1040) being configured to acquire the first interface identifier in the first management instruction, and invoke an API corresponding to the first interface identifier to obtain information of at least one electronic device connected with the wireless relay router (120, 1040) as first device information;
receiving (419) the first device information transmitted from the wireless relay router (120, 1040); and
transmitting (420) the first device information to a management device, the management device being configured to display the first device information.

6. The method according to claim 1, wherein the transmitting a management instruction to the wireless relay router (120, 1040) via the management connection comprises:
acquiring a second interface identifier among the at least one management interface identifiers, the second interface identifier being an identifier of an API for controlling the electronic device; and
transmitting a second management instruction carrying the second interface identifier to the wireless relay router (120, 1040) via the management connection, the wireless relay router (120, 1040) being configured to acquire the second interface identifier in the second management instruction, and invoke an API corresponding to the second interface identifier to control the electronic device connected with the wireless relay router (120, 1040).

7. The method according to claim 5, wherein the transmitting the first device information to a management device comprises:
acquiring information of at least one electronic device (130, 140) connected with the wireless primary router (110, 1020) as second device information; and
transmitting the first device information and the second device information to the management device;
wherein, the first device information comprises at least one selected from a group consisting of a Media Access Control MAC address, an Internet Protocol IP address, and connection status information of the electronic device connected with the wireless relay router (120, 1040); and
the second device information comprises at least one selected from a group consisting of a MAC address, an IP address, and connection status information of the electronic device connected with the wireless primary router (110, 1020).

8. A method for device management, applicable to a wireless relay router (120, 1040), comprising:
establishing (302) a management connection with a wireless primary router (110, 1020), distinct from the wireless relay router;
providing (304) the wireless primary router (110, 1020) with at least one management interface identifier via the management connection, the at least one management interface identifier being an identifier of an Application Programming Interface API for providing management function in the wireless relay router (120, 1040);
receiving (306) a management instruction transmitted via the management connection from the wireless primary router (110, 1020), the management instruction carrying the at least one management interface identifier; and
managing (308) an electronic device connected with the wireless relay router (120, 1040) according to the management instruction.

9. The method according to claim 8, wherein the providing the wireless primary router (110, 1020) with a management interface identifier via the management connection comprises:
receiving (411) a management interface acquiring request transmitted via the management connection from the wireless primary router, the management interface acquiring request being transmitted from the wireless primary router (110, 1020) when the wireless primary router (110, 1020) is detected as being compatible with the wireless relay router (120, 1040); and
transmitting (412) at least one management interface identifier to the wireless primary router (110, 1020) via the management connection.

10. The method according to claim 9, further comprising:
receiving (406) a private protocol message transmitted from the wireless primary router (110, 1020); and
transmitting (407) a feedback message to the wireless primary router (110, 1020) via the management connection, the wireless primary router (110, 1020) being configured to detect whether the wireless primary router (110, 1020) is compatible with the wireless relay router (120, 1040) according to the feedback message.

11. The method according to claim 8, wherein the managing an electronic device connected with the wireless relay router (120, 1040) according to the management instruction comprises:
acquiring (416) a first interface identifier in a first management instruction, the first interface identifier being an identifier of an API for acquiring information of the electronic device;
invoking (417) an API corresponding to the first interface identifier to obtain information of at least one electronic device connected with the wireless relay router (120, 1040) as first device information; and
transmitting (418) the first device information to the wireless primary router (110, 1020) via the management connection, the first device information comprising at least one selected from a group consisting of a Media Access Control MAC address, an Internet Protocol IP address, and connection status information of the electronic device connected with the wireless relay router (120, 1040).

12. The method according to claim 8, wherein, the managing an electronic device connected with the wireless relay router (120, 1040) according to the management instruction comprises:
acquiring a second interface identifier in a second management instruction, the second interface identifier being an identifier of an API for controlling the electronic device; and
invoking an API corresponding to the second interface identifier to control the electronic device connected with the wireless relay router (120, 1040).

13. An apparatus for device management, applicable to a wireless primary router (110, 1020), comprising:
a processor (920); and
a memory (904) for storing instructions executable by the processor (920);
wherein the processor (920) is configured to:
establish a management connection with a wireless relay router (120, 1040), distinct from the wireless primary router;
acquire at least one management interface identifier from the wireless relay router via the management connection, the at least one management interface identifier being an identifier of an Application Programming Interface API for providing management function in the wireless relay router (120, 1040); and
transmit a management instruction to the wireless relay router (120, 1040) via the management connection, the management instruction being used to manage an electronic device connected with the wireless relay router (120, 1040) and carrying the management interface identifier.

14. An apparatus for device management, applicable to a wireless relay router (120, 1040), comprising:
a processor; and
a memory for storing instructions executable by the processor;
wherein the processor is configured to:
establish a management connection with a wireless primary router (110, 1020), distinct from the wireless relay router;
provide the wireless primary router (110, 1020) with at least one management interface identifier via the management connection, the at least one management interface identifier being an identifier of an Application Programming Interface API for providing management function in the wireless relay router (120, 1040);
receive a management instruction transmitted via the management connection from the wireless primary router (110, 1020), the management instruction carrying the management interface identifier; and
manage an electronic device connected with the wireless relay router (120, 1040) according to the management instruction.

15. A network system, comprising a wireless primary router (110, 1020) and a wireless relay router (120, 1040), wherein,
the wireless primary router (110, 1020) is connected with the wireless relay router (120, 1040) via a wireless network;
the wireless primary router (110, 1020) comprises an apparatus for device management according to claim 13; and the wireless relay router (120, 1040) comprises an apparatus for device management according to claim 14.

## Patentansprüche

1. Verfahren zur Vorrichtungsverwaltung, anwendbar auf einen drahtlosen primären Router (110, 1020), Folgendes umfassend:
Herstellen (202) einer Verwaltungsverbindung mit einem drahtlosen Relais-Router (120, 1040), der sich von dem drahtlosen primären Router unterscheidet;
Erfassen (204) mindestens einer Verwaltungs-Schnittstellenkennung vom drahtlosen Relais-Router (120, 1040) über die Verwaltungsverbindung, wobei die mindestens eine Verwaltungs-Schnittstellenkennung eine Kennung einer Anwendungsprogrammierschnittstellen API zum Bereitstellen einer Verwaltungsfunktion im drahtlosen Relais-Router (120, 1040) ist; und
Senden (206) eines Verwaltungsbefehls an den drahtlosen Relais-Router (120, 1040) über die Verwaltungsverbindung, wobei der Verwaltungsbefehl verwendet wird, um eine elektronische Vorrichtung (130, 140) zu verwalten, die mit dem drahtlosen Relais-Router (120, 1040) verbunden ist und die mindestens eine Verwaltungs-Schnittstellenkennung trägt.

2. Verfahren nach Anspruch 1, wobei das Herstellen einer Verwaltungsverbindung mit einem drahtlosen Relais-Router (120, 1040) umfasst:
Empfangen (402) einer vom drahtlosen Relais-Router (120, 1040) gesendeten Verbindungsanforderung; und
Senden (403) von Anforderungsannahmeinformationen an den drahtlosen Relais-Router (120, 1040) und Herstellen der Verwaltungsverbindung mit dem drahtlosen Relais-Router (120, 1040).

3. Verfahren nach Anspruch 1, wobei das Erfassen einer Verwaltungs-Schnittstellenkennung vom drahtlosen Relais-Router (120, 1040) über die Verwaltungsverbindung umfasst:
Senden (410) einer Verwaltungs-Schnittstellenerfassungsanforderung an den drahtlosen Relais-Router (120, 1040) über die Verwaltungsverbindung; und
Empfangen (413) mindestens einer Verwaltungs-Schnittstellenkennung, die über die Verwaltungsverbindung vom drahtlosen Relais-Router (120, 1040) gesendet wird.

4. Verfahren nach einem der Ansprüche 1 bis 3, umfassend:
Senden (405) einer privaten Protokollnachricht an den drahtlosen Relais-Router (120, 1040) über die Verwaltungsverbindung;
Empfangen (408) einer Rückmeldung, die vom drahtlosen Relais-Router (120, 1040) gesendet wird, wobei die Rückmeldung vom drahtlosen Relais-Router (120, 1040) gesendet wird, nachdem der drahtlose Relais-Router (120, 1040) die private Protokollnachricht empfängt;
Erkennen (409), ob der drahtlose Relais-Router (120, 1040) mit dem drahtlosen primären Router (110, 1020) entsprechend der Rückmeldung kompatibel ist; und
Durchführen der Erfassung einer Verwaltungs-Schnittstellenkennung vom drahtlosen Relais-Router (120, 1040) über die Verwaltungsverbindung, wenn der drahtlose Relais-Router (120, 1040) als mit dem drahtlosen primären Router (110, 1020) kompatibel erkannt wird.

5. Verfahren nach Anspruch 1, wobei das Senden eines Verwaltungsbefehls an den drahtlosen Relais-Router (120, 1040) über die Verwaltungsverbindung umfasst:
Erfassen (414) einer ersten Schnittstellenkennung unter der/den (mindestens einen) Verwaltungs-Schnittstellenkennung(en), wobei die erste Schnittstellenkennung eine Kennung eines API zum Erfassen von Informationen über die elektronische Vorrichtung ist;
Senden (415) eines ersten Verwaltungsbefehls mit der ersten Schnittstellenkennung an den drahtlosen Relais-Router (120, 1040) über die Verwaltungsverbindung, wobei der drahtlose Relais-Router (120, 1040) dazu ausgelegt ist, dass er die erste Schnittstellenkennung im ersten Verwaltungsbefehl erfasst und eine API aufruft, die der ersten Schnittstellenkennung entspricht, um Informationen über mindestens eine elektronische Vorrichtung, die mit dem drahtlosen Relais-Router (120, 1040) verbunden ist, als erste Vorrichtungsinformationen zu erhalten;
Empfangen (419) der ersten vom drahtlosen Relais-Router (120, 1040) gesendeten Vorrichtungsinformationen; und
Senden (420) der ersten Vorrichtungsinformationen an eine Verwaltungsvorrichtung, wobei die Verwaltungsvorrichtung dazu ausgelegt ist, dass sie die ersten Verwaltungsinformationen anzeigt.

6. Verfahren nach Anspruch 1, wobei das Senden eines Verwaltungsbefehls an den drahtlosen Relais-Router (120, 1040) über die Verwaltungsverbindung umfasst:
Erfassen einer zweiten Schnittstellenkennung unter der/den (mindestens einen) Verwaltungs-Schnittstellenkennung(en), wobei die zweite Schnittstellenkennung eine Kennung einer API zur Steuerung der elektronischen Vorrichtung ist; und
Senden eines zweiten Verwaltungsbefehls mit der zweiten Schnittstellenkennung an den drahtlosen Relais-Router (120, 1040) über die Verwaltungsverbindung, wobei der drahtlose Relais-Router (120, 1040) dazu ausgelegt ist, dass er die zweite Schnittstellenkennung im zweiten Verwaltungsbefehl erfasst und eine API aufruft, die der zweiten Schnittstellenkennung entspricht, um die mit dem drahtlosen Relais-Router (120, 1040) verbundene elektronische Vorrichtung zu steuern.

7. Verfahren nach Anspruch 5, wobei das Senden der ersten Vorrichtungsinformationen an eine Verwaltungsvorrichtung umfasst:
Erfassen von Informationen über mindestens eine elektronische Vorrichtung (130, 140), die mit dem drahtlosen primären Router (110, 1020) verbunden ist, als zweite Vorrichtungsinformationen; und
Senden der ersten Vorrichtungsinformationen und der zweiten Vorrichtungsinformationen an die Verwaltungsvorrichtung;
wobei die ersten Vorrichtungsinformationen mindestens eine Art aus einer Gruppe bestehend aus einer Media Access Control-MAC-Adresse, einer Internetprotokoll-IP-Adresse und Verbindungsstatusinformationen der elektronischen Vorrichtung, die mit dem drahtlosen Relais-Router (120, 1040) verbunden ist, umfassen; und
wobei die zweiten Vorrichtungsinformationen mindestens eine Art aus einer Gruppe bestehend aus einer MAC-Adresse, einer IP-Adresse und Verbindungsstatusinformationen der mit dem drahtlosen primären Router (110, 1020) verbundenen elektronischen Vorrichtung umfassen.

8. Verfahren zur Vorrichtungsverwaltung, anwendbar auf einen drahtlosen Relais-Router (120, 1040), das Folgendes umfasst:
Herstellen (302) einer Verwaltungsverbindung mit einem drahtlosen primären Router (110, 1020), der sich von dem drahtlosen Relais-Router unterscheidet;
Versehen (304) des drahtlosen primären Routers (110, 1020) mit mindestens einer Verwaltungs-Schnittstellenkennung über die Verwaltungsverbindung, wobei die mindestens eine Verwaltungs-Schnittstellenkennung eine Kennung einer Anwendungsprogrammierschnittstelle (API) ist, um im drahtlosen Relais-Router (120, 1040) eine Verwaltungsfunktion bereitzustellen;
Empfangen (306) eines Verwaltungsbefehls, der über die Verwaltungsverbindung vom drahtlosen primären Router (110, 1020) gesendet wird, wobei der Verwaltungsbefehl die mindestens eine Verwaltungs-Schnittstellenkennung trägt; und
Verwalten (308) einer elektronischen Vorrichtung, die mit dem drahtlosen Relais-Router (120, 1040) verbunden ist, in Entsprechung zu dem Verwaltungsbefehl.

9. Verfahren nach Anspruch 8, wobei das Versehen des drahtlosen primären Routers (110, 1020) mit einer Verwaltungs-Schnittstellenkennung über die Verwaltungsverbindung umfasst:
Empfangen (411) einer Verwaltungs-Schnittstellenerfassungsanforderung, die über die Verwaltungsverbindung vom drahtlosen primären Router gesendet wird, wobei die Verwaltungs-Schnittstellenerfassungsanforderung von dem drahtlosen primären Router (110, 1020) gesendet wird, wenn der drahtlose primäre Router (110, 1020) als mit dem drahtlosen Relais-Router (120, 1040) kompatibel erkannt wird; und
Senden (412) mindestens einer Verwaltungs-Schnittstellenkennung an den drahtlosen primären Router (110, 1020) über die Verwaltungsverbindung.

10. Verfahren nach Anspruch 9, ferner umfassend:
Empfangen (406) einer privaten Protokollnachricht, die vom drahtlosen primären Router (110, 1020) gesendet wird; und
Senden (407) einer Rückmeldung an den drahtlosen primären Router (110, 1020) über die Verwaltungsverbindung, wobei der drahtlose primäre Router (110, 1020) dazu ausgelegt ist, dass er erkennt, ob der drahtlose primäre Router (110, 1020) mit dem drahtlosen Relais-Router (120, 1040) gemäß der Rückmeldung kompatibel ist.

11. Verfahren nach Anspruch 8, wobei das Verwalten einer elektronischen Vorrichtung, die mit dem drahtlosen Relais-Router (120, 1040) verbunden ist, gemäß dem Verwaltungsbefehl umfasst:
Erfassen (416) einer ersten Schnittstellenkennung in einem ersten Verwaltungsbefehl, wobei die erste Schnittstellenkennung eine Kennung einer API zum Erfassen von Informationen über die elektronische Vorrichtung ist;
Aufrufen (417) einer API, die der ersten Schnittstellenkennung entspricht, um Informationen über mindestens eine elektronische Vorrichtung, die mit dem drahtlosen Relais-Router (120, 1040) verbunden ist, als erste Vorrichtungsinformationen zu erhalten; und
Senden (418) der ersten Vorrichtungsinformationen an den drahtlosen primären Router (110, 1020) über die Verwaltungsverbindung, wobei die ersten Vorrichtungsinformationen mindestens eine Art aus einer Gruppe bestehend aus einer Media Access Control-MAC-Adresse, einer Internet Protocol-IP-Adresse und Verbindungsstatusinformationen der mit dem drahtlosen Relais-Router (120, 1040) verbundenen elektronischen Vorrichtung umfassen.

12. Verfahren nach Anspruch 8, wobei das Verwalten einer mit dem drahtlosen Relais-Router (120, 1040) verbundenen elektronischen Vorrichtung gemäß dem Verwaltungsbefehl umfasst:
Erfassen einer zweiten Schnittstellenkennung in einem zweiten Verwaltungsbefehl, wobei die zweite Schnittstellenkennung eine Kennung einer API zur Steuerung der elektronischen Vorrichtung ist; und
Aufrufen einer API, die der zweiten Schnittstellenkennung entspricht, zum Steuern der elektronischen Vorrichtung, die mit dem drahtlosen Relais-Router (120, 1040) verbunden ist.

13. Einrichtung zur Vorrichtungsverwaltung, anwendbar auf einen drahtlosen primären Router (110, 1020), umfassend:
einen Prozessor (920); und
einen Speicher (904) zum Speichern von durch den Prozessor (920) ausführbaren Befehlen;
wobei der Prozessor (920) dazu ausgelegt ist:
eine Verwaltungsverbindung mit einem Drahtlosen Relais-Router (120, 1040) herzustellen, der sich von dem drahtlosen primären Router unterscheidet;
mindestens eine Verwaltungs-Schnittstellenkennung von dem drahtlosen Relais-Router über die Verwaltungsverbindung zu erfassen, wobei die mindestens eine Verwaltungs-Schnittstellenkennung eine Kennung einer Anwendungsprogrammierungsschnittstelle (API) zum Bereitstellen von Verwaltungsfunktionen im drahtlosen Relais-Router (120, 1040) ist; und
einen Verwaltungsbefehl über die Verwaltungsverbindung an den drahtlosen Relais-Router (120, 1040) zu senden, wobei der Verwaltungsbefehl zum Verwalten einer elektronischen Vorrichtung verwendet wird, die mit dem drahtlosen Relais-Router (120, 1040) verbunden ist und die Verwaltungs-Schnittstellenkennung trägt.

14. Einrichtung zur Vorrichtungsverwaltung, anwendbar auf einen drahtlosen Relais-Router (120, 1040), umfassend:
einen Prozessor; und
einen Speicher zum Speichern von durch den Prozessor (920) ausführbaren Befehlen;
wobei der Prozessor dazu ausgelegt ist:
eine Verwaltungsverbindung mit einem drahtlosen primären Router (110, 1020) herzustellen, die sich vom drahtlosen Relais-Router unterscheidet;
den drahtlosen primären Router (110, 1020) über die Verwaltungsverbindung mit mindestens einer Verwaltungs-Schnittstellenkennung zu versehen, wobei die mindestens eine Verwaltungs-Schnittstellenkennung eine Kennung einer Anwendungsprogrammierschnittstelle (API) zum Bereitstellen von Verwaltungsfunktionen im drahtlosen Relais-Router (120, 1040) ist;
einen Verwaltungsbefehl zu empfangen, der über die Verwaltungsverbindung vom drahtlosen primären Router (110, 1020) gesendet wird, wobei der Verwaltungsbefehl die Verwaltungs-Schnittstellenkennung trägt; und
Verwalten einer mit dem drahtlosen Relais-Router (120, 1040) verbundenen elektronischen Vorrichtung gemäß dem Verwaltungsbefehl.

15. Netzwerksystem, umfassend einen drahtlosen primären Router (110, 1020) und einen drahtlosen Relais-Router (120, 1040), wobei:
der drahtlose primäre Router (110, 1020) mit dem drahtlosen Relais-Router (120, 1040) über ein drahtloses Netzwerk verbunden ist;
der drahtlose primäre Router (110, 1020) eine Einrichtung für die Vorrichtungsverwaltung gemäß Anspruch 13 umfasst und der drahtlose Relais-Router (120, 1040) eine Vorrichtung zur Vorrichtungsverwaltung nach Anspruch 14 umfasst.

## Revendications

1. Procédé de gestion de dispositif, applicable à un routeur primaire sans fil (110, 1020), comprenant :
l'établissement (202) d'une connexion de gestion avec un routeur relais sans fil (120, 1040), distinct du routeur primaire sans fil ;
l'acquisition (204) d'au moins un identifiant d'interface de gestion à partir du routeur relais sans fil (120, 1040) par l'intermédiaire de la connexion de gestion, l'au moins un identifiant d'interface de gestion étant un identifiant d'une interface de programmation d'application API permettant de fournir une fonction de gestion dans le routeur relais sans fil (120, 1040) ; et
la transmission (206) d'une instruction de gestion au routeur relais sans fil (120, 1040) par l'intermédiaire de la connexion de gestion, l'instruction de gestion étant utilisée pour gérer un dispositif électronique (130, 140) connecté au routeur relais sans fil (120, 1040) et transportant l'au moins un identifiant d'interface de gestion.

2. Procédé selon la revendication 1, dans lequel l'établissement d'une connexion de gestion avec un routeur relais sans fil (120, 1040) comprend :
la réception (402) d'une demande de connexion transmise à partir du routeur relais sans fil (120, 1040) ; et
la transmission (403) d'informations d'acceptation de demande au routeur relais sans fil (120, 1040) et l'établissement de la connexion de gestion avec le routeur relais sans fil (120, 1040).

3. Procédé selon la revendication 1, dans lequel l'acquisition d'un identifiant d'interface de gestion à partir du routeur relais sans fil (120, 1040) par l'intermédiaire de la connexion de gestion comprend :
la transmission (410) d'une demande d'acquisition d'interface de gestion au routeur relais sans fil (120, 1040) par l'intermédiaire de la connexion de gestion ; et
la réception (413) d'au moins un identifiant d'interface de gestion transmis par l'intermédiaire de la connexion de gestion à partir du routeur relais sans fil (120, 1040).

4. Procédé selon l'une quelconque des revendications 1 à 3, comprenant les étapes suivantes :
transmettre (405) un message de protocole privé au routeur relais sans fil (120, 1040) par l'intermédiaire de la connexion de gestion ;
recevoir (408) un message de retour transmis à partir du routeur relais sans fil (120, 1040), le message de retour étant renvoyé à partir du routeur relais sans fil (120, 1040) après que le routeur relais sans fil (120, 1040) a reçu le message de protocole privé ;
détecter (409) si le routeur relais sans fil (120, 1040) est compatible ou non avec le routeur primaire sans fil (110, 1020) en fonction du message de retour ; et
exécuter l'acquisition d'un identifiant d'interface de gestion à partir du routeur relais sans fil (120, 1040) par l'intermédiaire de la connexion de gestion, lorsque le routeur relais sans fil (120, 1040) est détecté comme étant compatible avec le routeur primaire sans fil (110, 1020).

5. Procédé selon la revendication 1, dans lequel la transmission d'une instruction de gestion au routeur relais sans fil (120, 1040) par l'intermédiaire de la connexion de gestion comprend :
l'acquisition (414) d'un premier identifiant d'interface parmi l'au moins un identifiant d'interface de gestion, le premier identifiant d'interface étant un identifiant d'une API permettant d'acquérir des informations du dispositif électronique ;
la transmission (415) d'une première instruction de gestion transportant le premier identifiant d'interface vers le routeur relais sans fil (120, 1040) par l'intermédiaire de la connexion de gestion, le routeur relais sans fil (120, 1040) étant configuré pour acquérir le premier identifiant d'interface dans la première instruction de gestion et pour appeler une API correspondant au premier identifiant d'interface pour obtenir des informations d'au moins un dispositif électronique connecté au routeur relais sans fil (120, 1040) en tant que premières informations de dispositif ;
la réception (419) des premières informations de dispositif transmises à partir du routeur relais sans fil (120, 1040) ; et
la transmission (420) des premières informations de dispositif à un dispositif de gestion, le dispositif de gestion étant configuré pour afficher les premières informations de dispositif.

6. Procédé selon la revendication 1, dans lequel la transmission d'une instruction de gestion au routeur relais sans fil (120, 1040) par l'intermédiaire de la connexion de gestion comprend :
l'acquisition d'un second identifiant d'interface parmi l'au moins un identifiant d'interface de gestion, le second identifiant d'interface étant un identifiant d'une API permettant de commander le dispositif électronique ; et
la transmission d'une seconde instruction de gestion transportant le second identifiant d'interface vers le routeur relais sans fil (120, 1040) par l'intermédiaire de la connexion de gestion, le routeur relais sans fil (120, 1040) étant configuré pour acquérir le second identifiant d'interface dans la seconde instruction de gestion et pour appeler une API correspondant au second identifiant d'interface pour commander le dispositif électronique connecté au routeur relais sans fil (120, 1040).

7. Procédé selon la revendication 5, dans lequel la transmission des premières informations de dispositif à un dispositif de gestion comprend :
l'acquisition d'informations d'au moins un dispositif électronique (130, 140) connecté au routeur primaire sans fil (110, 1020) en tant que secondes informations de dispositif ; et
la transmission des premières informations de dispositif et des secondes informations de dispositif au dispositif de gestion ;
les premières informations de dispositif comprenant au moins un élément choisi dans un groupe constitué d'une adresse de contrôle d'accès au support MAC, d'une adresse de protocole Internet IP et d'informations d'état de connexion du dispositif électronique connecté au routeur relais sans fil (120, 1040) ; et
les secondes informations de dispositif comprenant au moins un élément choisi dans un groupe constitué d'une adresse MAC, d'une adresse IP et d'informations d'état de connexion du dispositif électronique connecté au routeur primaire sans fil (110, 1020).

8. Procédé de gestion de dispositif, applicable à un routeur relais sans fil (120, 1040), comprenant :
l'établissement (302) d'une connexion de gestion avec un routeur primaire sans fil (110, 1020), distinct du routeur relais sans fil ;
l'utilisation (304) du routeur primaire sans fil (110, 1020) avec au moins un identifiant d'interface de gestion par l'intermédiaire de la connexion de gestion, l'au moins un identifiant d'interface de gestion étant un identifiant d'une interface de programmation d'application API permettant de fournir une fonction de gestion dans le routeur relais sans fil (120, 1040) ;
la réception (306) d'une instruction de gestion transmise par l'intermédiaire de la connexion de gestion à partir du routeur primaire sans fil (110, 1020), l'instruction de gestion transportant l'au moins un identifiant d'interface de gestion ; et
la gestion (308) d'un dispositif électronique connecté au routeur relais sans fil (120, 1040) conformément à l'instruction de gestion.

9. Procédé selon la revendication 8, dans lequel l'utilisation du routeur primaire sans fil (110, 1020) avec un identifiant d'interface de gestion par l'intermédiaire de la connexion de gestion comprend :
la réception (411) d'une demande d'acquisition d'interface de gestion transmise par l'intermédiaire de la connexion de gestion à partir du routeur primaire sans fil, la demande d'acquisition d'interface de gestion étant transmise à partir du routeur primaire sans fil (110, 1020) lorsque le routeur primaire sans fil (110, 1020) est détecté comme étant compatible avec le routeur relais sans fil (120, 1040) ; et
la transmission (412) d'au moins un identifiant d'interface de gestion au routeur primaire sans fil (110, 1020) par l'intermédiaire de la connexion de gestion.

10. Procédé selon la revendication 9, comprenant en outre :
la réception (406) d'un message de protocole privé transmis à partir du routeur primaire sans fil (110, 1020) ; et
la transmission (407) d'un message de retour au routeur primaire sans fil (110, 1020) par l'intermédiaire de le connexion de gestion, le routeur primaire sans fil (110, 1020) étant configuré pour détecter si le routeur primaire sans fil (110, 1020) est compatible ou non avec le routeur relais sans fil (120, 1040) en fonction du message de retour.

11. Procédé selon la revendication 8, la gestion d'un dispositif électronique connecté au routeur relais sans fil (120, 1040) conformément à l'instruction de gestion comprenant :
l'acquisition (416) d'un premier identifiant d'interface dans une première instruction de gestion, le premier identifiant d'interface étant un identifiant d'une API permettant d'acquérir des informations du dispositif électronique ;
l'appel (417) d'une API correspondant au premier identifiant d'interface pour obtenir des informations d'au moins un dispositif électronique connecté au routeur relais sans fil (120, 1040) en tant que premières informations de dispositif ; et
la transmission (418) des premières informations de dispositif au routeur primaire sans fil (110, 1020) par l'intermédiaire de la connexion de gestion, les premières informations de dispositif comprenant au moins un élément choisi dans un groupe constitué d'une adresse de contrôle d'accès au support MAC, d'une adresse de protocole Internet IP et d'informations d'état de connexion du dispositif électronique connecté au routeur relais sans fil (120, 1040).

12. Procédé selon la revendication 8, la gestion d'un dispositif électronique connecté au routeur relais sans fil (120, 1040) conformément à l'instruction de gestion comprenant :
l'acquisition d'un second identifiant d'interface dans une seconde instruction de gestion, le second identifiant d'interface étant un identifiant d'une API permettant de commander le dispositif électronique ; et
l'appel d'une API correspondant au second identifiant d'interface pour commander le dispositif électronique connecté au routeur relais sans fil (120, 1040).

13. Appareil de gestion de dispositif, applicable à un routeur primaire sans fil (110, 1020), comprenant :
un processeur (920) ; et
une mémoire (904) d'enregistrement des instructions exécutables par le processeur (920) ;
le processeur (920) étant configuré pour :
établir une connexion de gestion avec un routeur relais sans fil (120, 1040), distinct du routeur primaire sans fil ;
acquérir au moins un identifiant d'interface de gestion à partir du routeur relais sans fil par l'intermédiaire de la connexion de gestion, l'au moins un identifiant d'interface de gestion étant un identifiant d'une interface de programmation d'application API permettant de fournir une fonction de gestion dans le routeur relais sans fil (120, 1040) ; et
transmettre une instruction de gestion au routeur relais sans fil (120, 1040) par l'intermédiaire de la connexion de gestion, l'instruction de gestion servant à gérer un dispositif électronique connecté au routeur relais sans fil (120, 1040) et transportant l'identifiant d'interface de gestion.

14. Appareil de gestion de dispositif, applicable à un routeur relais sans fil (120, 1040), comprenant :
un processeur ; et
une mémoire d'enregistrement des instructions exécutables par le processeur ;
le processeur étant configuré pour :
établir une connexion de gestion avec un routeur primaire sans fil (110, 1020), distinct du routeur relais sans fil ;
fournir au routeur primaire sans fil (110, 1020) au moins un identifiant d'interface de gestion par l'intermédiaire de la connexion de gestion, l'au moins un identifiant d'interface de gestion étant un identifiant d'une interface de programmation d'application API permettant de fournir une fonction de gestion dans le routeur relais sans fil (120, 1040) ;
recevoir une instruction de gestion transmise par l'intermédiaire de la connexion de gestion à partir du routeur primaire sans fil (110, 1020), l'instruction de gestion transportant l'identifiant d'interface de gestion ; et
gérer un dispositif électronique connecté au routeur relais sans fil (120, 1040) conformément à l'instruction de gestion.

15. Système de réseau, comprenant un routeur primaire sans fil (110, 1020) et un routeur relais sans fil (120, 1040), dans lequel,
le routeur primaire sans fil (110, 1020) est connecté au routeur relais sans fil (120, 1040) par l'intermédiaire d'un réseau sans fil ;
le routeur primaire sans fil (110, 1020) comprend un appareil de gestion de dispositif conforme à la revendication 13 ; et le routeur relais sans fil (120, 1040) comprend un appareil de gestion de dispositif conforme à la revendication 14.
